# EUROPEAN PATENT APPLICATION

(11) **EP 4 647 285 A1**
(43) Date of publication of application: **12.11.2025**
(21) Application number: 25174752.3
(22) Date of filing: 07.05.2025
(51) Int. Cl.: B60L 3/00, B60L 53/16, B60L 53/20

(54) **CONTROL PILOT LINE MONITORING MODULE FOR ELECTRIC VEHICLE CHARGING SYSTEM**

(30) Priority: 07.05.2024 US 202463643911 P; 03.04.2025 US 202519098986
(71) Applicant: Integrated Silicon Solution Israel Ltd., Tel Aviv (IL)
(72) Inventor: Katsir, Nadav, Milpitas, 95035 (US); Tene, Eitan, Milpitas, 95035 (US); Pollack, Eyal, Milpitas, 95035 (US); Tang, Jeffrey Yuh-Fong, Milpitas, 95035 (US); Yang, Tsen-Shau, Milpitas, 95035 (US); Zadicario, Raphi, Milpitas, 95035 (US)
(74) Representative: Williams Powell

(57) **Abstract**

A control pilot monitoring module (40) in an on-board charger (25) of an electrical vehicle (20) includes a measure circuit and an evaluate circuit to perform the control pilot line monitoring to determine the operational state of one or more charging inlets (22A, 22B). In response to detecting an active charging inlet having a connection to an EVSE (10), the control pilot monitoring module (40) issues a control signal to activate or wake up a charge controller (45) of the on-board charger to initiate the charging operation. In some embodiment, in the case of a dual charging inlet electrical vehicle, the control pilot line monitoring module (40) further includes a switch circuit to switchably connect signals associated with the active charging inlet to the charge controller. In this manner, a single charge controller can be used to support dual charging inlet electric vehicle.

## Description

### CROSS REFERENCE TO RELATED APPLICATIONS

This application claims priority to U.S. Patent Application No. 19/098,986 filed April 3 2025 and U.S. Provisional Patent Application No. 63/643,911, entitled "Control Pilot Line Monitoring System For Electric Vehicle Charging Systems," filed May 7, 2024, which are incorporated herein by reference for all purposes.

### FIELD OF THE INVENTION

The invention relates to electric vehicle charging systems and, in particular, to a control pilot line monitoring module for single or dual charging inlet electric vehicle charging systems.

### BACKGROUND OF THE INVENTION

Electric vehicles (EVs) include an electric motor that is powered by electricity from a rechargeable battery pack. The electric vehicle battery is periodically recharged by connecting an on-board charger to a source of electricity. In particular, an electric vehicle includes an on-board charger with a charging port (also referred to as a "charging inlet") which is connected to an electrical vehicle supply equipment (EVSE) supplying a source of electricity. EVSE is also referred to as a charging station or an electrical vehicle charger ("EV charger"). Typically, the EVSE includes all the equipment required to charge the electric vehicle battery, including the cable and connector ("the cordset") for connecting to the charging inlet of the electric vehicle. As thus configured, the EVSE delivers energy to the electric vehicle battery and the battery is thereby recharged.

In practice, the on-board charger of an electric vehicle includes a charge controller, referred to as an electric vehicle charge controller (EVCC), with accompanying control application software to monitor and control the battery charging operation. For example, under current industry standard, EV chargers include a control pilot (CP) line providing a control pilot signal that is used by the vehicle's on-board charger and the charging equipment to communicate the state of the charging system, the charging equipment's maximum charging current and any errors. The charge controller of the electric vehicle's on-board charger, executing associated control application software, must therefore continuously monitor the control pilot line to detect the presence of activities, such as indication of the start or an end of a charging operation.

To that end, the charge controller in the electric vehicle has to be kept powered on or kept awake to detect initiation of a charging operation. Although the electric vehicle battery may only be recharged occasionally, such as once a day, the charge controller must nonetheless be kept powered on continuously to monitor and detect a charging event. In some examples, the charge controller is continuously powered up, such as every 100-200ms, to monitor the status of the charger. The need to keep waking up the charge controller for monitoring purpose leads to undesirable power loss.

### SUMMARY OF THE INVENTION

The present disclosure discloses a control pilot monitoring module in an on-board charger for a single or dual charging inlet electric vehicle, substantially as shown in and/or described below, for example in connection with at least one of the figures, as set forth more completely in the claims.

In some embodiments, a control pilot monitoring module in an on-board charger of a dual charging inlet electric vehicle including a first charging inlet and a second charging inlet is described. The control pilot monitoring module includes a measure circuit coupled to a first control pilot line of the first charging inlet and a second control pilot line of the second charging inlet, the control pilot measure circuit detecting a first signal level and a first pulse width value of a first control pilot signal on the first control pilot line and a second signal level and a second pulse width value of a second control pilot signal on the second control pilot line; an evaluate circuit coupled to the measure circuit to receive the detected first and second signal levels and the detected first and second pulse width values and to determine an active charging inlet status, the evaluate circuit determining an active charging inlet among the first and second charging inlets in response to the first or second signal level having a value indicative of a connection of the first or second charging inlet to an electrical vehicle supply equipment (EVSE), the evaluate circuit storing the first and second signal levels, the first and second pulse width values and the active charging inlet status in a set of registers; and a switch circuit configured to receive first and second power-line communication signals transmitted on the first and second control pilot lines of the first and second charging inlets and switchably connect a power-line communication signal associated with the active charging inlet to an output terminal in response to an inlet select signal, the inlet select signal being a data value stored in the set of registers and being indicative of the active charging inlet as determined by the evaluate circuit. In response to the first or second charging inlet being determined to be the active charging inlet, the control pilot monitoring module generates a first control signal to activate a charge controller of the on-board charger.

In other embodiments, a control pilot monitoring module in an on-board charger with a first charging inlet includes: a measure circuit coupled to a first control pilot line of the first charging inlet, the control pilot measure circuit detecting a first signal level and a first pulse width value of a first control pilot signal on the first control pilot line; and an evaluate circuit coupled to the measure circuit to receive the detected first signal level and the detected first pulse width value and to determine a status of the first charging inlet, the evaluate circuit determining the first charging inlet becoming an active charging inlet and having a connected status in response to the first signal level having a value indicative of a connection of the first charging inlet to an electrical vehicle supply equipment (EVSE), the evaluate circuit storing the first signal level, the first pulse width value and the status of the first charging inlet in a set of registers. In response to the first charging inlet being determined to have a connected status, the control pilot monitoring module generates a first control signal to power up a charge controller of the on-board charger in response to the charge controller being in a power down mode, and the control pilot monitoring module generates a second control signal to wake up the charge controller of the on-board charger in response to the charge controller being in a low power mode.

These and other advantages, aspects and novel features of the present invention, as well as details of an illustrated embodiment thereof, will be more fully understood from the following description and drawings.

### BRIEF DESCRIPTION OF THE DRAWINGS

Various embodiments of the invention are disclosed in the following detailed description and the accompanying drawings. Although the drawings depict various examples of the invention, the invention is not limited by the depicted examples. It is to be understood that, in the drawings, like reference numerals designate like structural elements. Also, it is understood that the depictions in the figures are not necessarily to scale.
Figure 1 is a block diagram of an electric vehicle charging environment in examples of the present invention.
Figure 2 is a schematic diagram of an on-board charger which can be implemented in the electric vehicle of Figure 1 in embodiments of the present invention.
Figure 3 illustrates the signal waveform of a representative control pilot signal in some examples.
Figure 4 is a block diagram of the control pilot monitoring module in embodiments of the present invention.
Figure 5 illustrates the schematic diagram of the CP measure circuit in some embodiments.
Figure 6 is a schematic diagram illustrating one set of the measurement circuits in the CP measure circuit in embodiments of the present invention.
Figure 7 is a schematic diagram of a PLC switch circuit which can be implemented in the control pilot monitoring module of Figure 4 in embodiments of the present invention.
Figure 8 is a block diagram of an electric vehicle charging environment illustrating parasitic loading effects in some examples.
Figure 9 illustrates a control pilot monitoring module implemented in an on-board charger of an electric vehicle in embodiments of the present invention.
Figure 10 is a schematic diagram of a PE difference circuit for dual charging inlets in embodiments of the present invention.
Figure 11 is a circuit implementation of a PE difference circuit in embodiments of the present invention.
Figure 12 illustrates the operation of the PE difference circuit of Figure 11 in some examples.

### DETAILED DESCRIPTION OF THE INVENTION

In embodiments of the present invention, an on-board charger of an electrical vehicle includes a control pilot line monitoring module to perform the control pilot line monitoring to determine the operational state of one or more charging inlets of an on-board charger. In response to detecting an active charging inlet having a connection to an EVSE, the control pilot line monitoring module issues a control signal to activate or wake up a charge controller of the on-board charger to initiate the charging operation. In this manner, the charge controller of the on-board charger can be kept powered off or put in sleep mode until awaken by the control pilot line monitoring module to take control of the charging operation. The control pilot line monitoring module has a smaller circuit footprint and simpler circuit construction and therefore consumes much less power than the charge controller. Using the control pilot line monitoring system to perform the control pilot monitoring function realizes appreciable reduction in power consumption. The charge controller of the on-board charger can be kept powered off or in a sleep mode during the long time period when there is no charging event while the control pilot line monitoring module of the present invention performs the control pilot line monitoring function.

In some embodiments, the control pilot line monitoring module performs control pilot line monitoring to detect for certain predefined conditions on the charging inlets and alerts the charge controller in response to detection of one of the predefined conditions. The charge controller maybe in a sleep mode or is activated but does not necessarily know the current status of the signals at the charging inlet. The control pilot line monitoring module monitors the signals at the charging inlet and alerts the charge controller when a predefined condition is detected. **In** some examples, the predefined condition may be the control pilot signal having a voltage value that crossed a specific threshold. **In** other examples, the predefined condition may be a change in the duty cycle of the control pilot signal. The control pilot line monitoring module performs the monitoring and detection functions and generate an alert for the charge controller in response to the detection. **In** this manner, the charge controller can be awakened or be alerted to react and respond to the detected condition.

**In** embodiments of the present invention, the control pilot line monitoring module is adapted to support a dual charging inlet electric vehicle. Most modern electric vehicles include a single charging inlet, which may be positioned on the front, left or right side of the vehicle. Recently, in some electric vehicles, two charging inlets are provided, for example, one on the left side and one on the right side of the vehicle. Having two charging inlets provides convenience to the driver to allows charging on either side of the vehicle. Even though an electric vehicle may be provided with two charging inlets, only one inlet will be active at a time for charging the electric vehicle battery. **In** embodiments of the present invention, the control pilot line monitoring module detects the active charging inlet among the two charging inlets of the electric vehicle and selects the signals associated with the active charging inlet for connection to the charge controller. **In** some embodiments, the control pilot line monitoring module includes a switch circuit to switchably connect signals associated with the active charging inlet to the charge controller of the on-board charger. In this manner, a single charge controller and associated circuitry can be used to support two charging inlets, which reduces the overall system cost for implementing an on-board charger for dual inlet electrical vehicles.

In the present description, the electric vehicle charging system is discussed using the Combined Charging System (CCS) standard for electric vehicle charging. The CCS standard uses two control signals - the proximity pilot (PP) and the control pilot (CP) signals - which are applicable for both AC charging and DC charging. For the sake of simplicity, CCS terminology will be used throughout to refer to the control signals between the charging station and the electric vehicle. Other electric vehicle charging standards exist. For example, the GB/T charging standard is another commonly employed electric vehicle charging standard. The GB/T charging standard (e.g. the GB/T 18487 standard) defines control signals for AC charging and DC charging separately. For instance, for AC charging under the GB/T standard, a CP signal similar to the control pilot signal of the CCS standard is used and a CC signal similar to the proximity pilot signal of the CCS standard is used. In another case, for DC charging under the GB/T standard, a CC1 signal (not a PWM signal) similar to the control pilot signal of the CCS standard is used and a CC2 signal similar to the proximity pilot signal of the CCS standard is used. Furthermore, for DC charging, CAN (controller area network) communication maybe used. Although the present description uses only CCS terminology, one of ordinary skill in the art would understand that the inventive subject matter described herein can be applied to other electric vehicle standards with appropriate modifications.

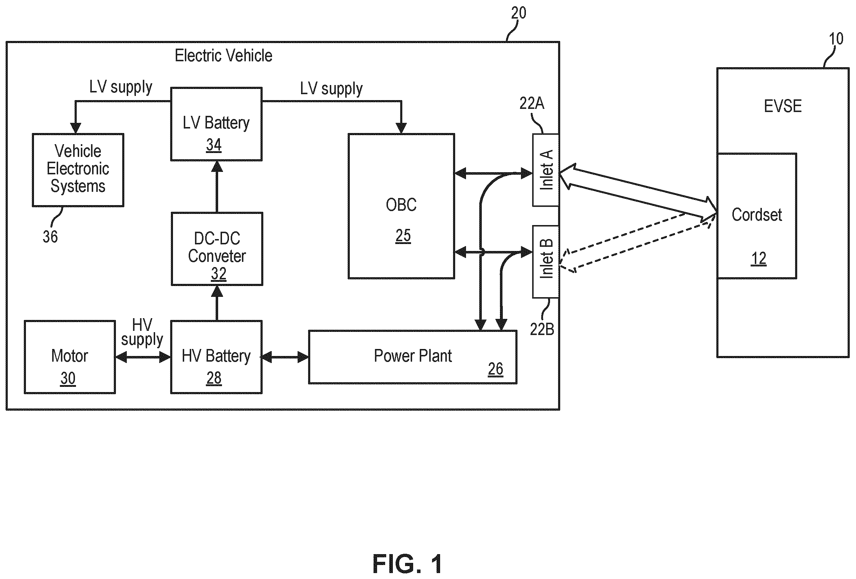

Figure 1 is a block diagram of an electric vehicle charging environment in examples of the present invention. In the example shown in Figure 1, an electric vehicle 20 with dual charging inlets 22A, 22B is to be connected to an EVSE (electric vehicle supply equipment) 10 to receive electricity for charging the electric vehicle's rechargeable battery. The EVSE 10 includes a cordset 12 (cable and connector) which is to be connected to one of charging inlet A (22A) or charging inlet B (22B) to begin the charging process. The cordset 12 includes power lines providing the electricity for recharging the battery and signal lines for providing control and communication between the EVSE 10 and the electric vehicle 20. For example, the Type 1 connector (or J1772 connector) has a five pin configuration, including an AC Line 1 (L1) for providing the voltage supply, a Neutral line to complete the AC circuit, a protective earth (PE) line to ensure the charging process is grounded, a proximity pilot (PP) line to indicate the state of connection between a charging inlet (A or B) and the EVSE cordset 12, and a control pilot (CP) line for controlling the charging process. The control pilot line carries a control pilot (CP) signal which is to be monitored by both the electric vehicle 20 and the EVSE 10 and respond thereto according to the status indicated by the control pilot signal.

In the electric vehicle 20, an on-board charger 25 is connected to the charging inlets A and B (22A, 22B) to monitor and control the charging process. Upon physical connection of the cordset 12 to the charging inlet A or B, the on-board charger 25 receive the control signals, such as the proximity pilot signal on the proximity pilot line and the control pilot signal on the control pilot line. The on-board charger 25 may further receive other communication signals transmitted on the control pilot line from the EVSE using applicable communication protocols, such as using a power-line communication protocol. The power lines (L1 and N) are provided to a power plant 26 to convert the input voltage supply into a high voltage value (typically 200V-400V) suitable for powering the electric motor 30 of the electric vehicle 20. In some examples, the power plant 26 may convert an AC source of electricity received on the power lines to a DC voltage for charging a high-voltage (HV) battery 28. The energy stored in the high voltage battery 28 can then be used to supply the electric motor 30 of the electric vehicle 20. The electric vehicle 20 may include a DC-DC converter 32 to step down the high voltage (200V-400V) from the battery 28 to provide a low voltage supply (e.g. 12V), which may be stored in a low voltage battery 34. The low voltage supply is used to power the on-board charger 25 and other vehicle electronic systems 36. In some examples, the low voltage supply (LV supply) maybe further stepped down to the voltage value needed for the electronic components of the vehicle's electronic systems.

In other examples, the electric vehicle may include a single charging inlet. In that case, the electric vehicle includes only inlet A (22A), for example, and the on-board charger 25 connects to the single charging inlet. In the following description, the electric vehicle is described as a dual charging inlet electric vehicle. One of ordinary skilled in the art would appreciate that aspects of the present invention can be applied to an electric vehicle with a single charging inlet.

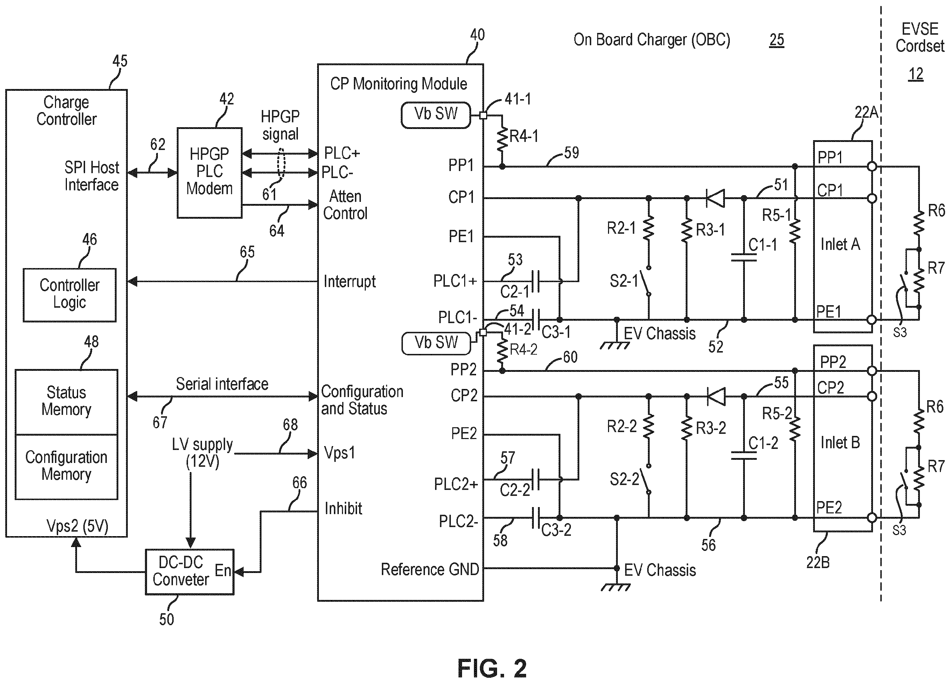

In embodiments of the present invention, the on-board charger of the electric vehicle incorporates a control pilot line monitoring module to perform the control pilot line monitoring function as well as providing support for managing multiple charging inlets on the electric vehicle. Figure 2 is a schematic diagram of an on-board charger which can be implemented in the electric vehicle of Figure 1 in embodiments of the present invention. Referring to Figure 2, the on-board charger 25 of the present invention includes a control pilot monitoring module 40 which communicates with a charge controller 45. The control pilot monitoring module 40 and the charge controller 45 operate cooperatively to manage the charging operation. The on-board charger 25 further includes passive elements and switches connecting the control signals from the charging inlets A and B (22A, 22B) to the control pilot monitoring module 40. In the present description, each charging inlet A or B is provided with the same passive element and switch configuration with the elements labeled with "-1" for those associated with the charging inlet A and labeled with "-2" for those associated with charging inlet B. It is understood that in the following description, references to an element, such as resistor R2, refers to the same element for inlet A and inlet B, or alternately, a resistor R2 refers to the resistor R2-1 for inlet A and resistor R2-2 for inlet B.

Figure 2 illustrates connection of charging inlet A or B to an EVSE cordset 12. For ease of discussion, certain passive elements (such as resistors R6, R7 and switch S3) which are provided in the cordset are shown connected to inlet A and also connected to inlet B. It is understood that Figure 2 is illustrative only of the passive elements that maybe present in the EVSE cordset and how those passive elements (resistors R6, R7 and switch S3) maybe coupled to the charging inlet A or B when the cordset is connected. Figure 2 is not intended to show that both charging inlets A and B are actually connected to the EVSE cordset 12 at the same time.

From the charging inlets A and B, the control pilot monitoring module 40 receives control signals including the proximity pilot signals PP1 and PP2 (on nodes 59, 60, respectively), the control pilot signals CP1 and CP2 (on nodes 51 and 55, respectively), the protective earth signals PE1 and PE2 (on nodes 52 and 56, respectively) and the power-line communication (PLC) signals which are differential signals PLC1+, PLC1-, PLC2+, and PLC2- (on nodes 53, 54, 57, 58, respectively). In the present example, the PLC signals are transmitted on the control pilot lines and the differential PLC signals are extracted from the control pilot lines through AC coupling, as will be described in more details below. To ensure safety, the protective earth signal (PE1, PE2) are both connected to the chassis of the electric vehicle. The common ground is used as the reference ground for the control pilot monitoring module 40 and the charge controller 45 (not shown). The common ground level between the protective earth signal and the EV chassis enables accurate detection of the signal levels of the control signals. The control pilot monitoring module 40 and the charge controller 45 are powered by the low voltage supply (node 68). In the present example, the low voltage supply is a 12V DC voltage. The control pilot monitoring module 40 receives the low voltage supply as the power supply voltage Vps1. Inside the module 40, the power supply voltage Vps1 may be further stepped down to a lower voltage, such as an Vdd voltage of 5V, for powering the circuitry internal to module 40. Meanwhile, the low voltage supply is coupled to a DC-DC converter 50 to step down the 12V supply voltage to a 5V supply voltage which is then provided to the charge controller 45 as the power supply voltage Vps2.

The on-board charger 25 monitors the control signals to determine when a connection to the EVSE is made and to manage the charging process. First, the control pilot monitoring module 40 monitors the proximity pilot signals (PP1, PP2) to detect the presence of a connection at inlet A or inlet B to an EVSE. The proximity pilot signal (PP1, PP2) has different voltage values as a function of a voltage divider network created by resistors in the EVSE connector and the charging inlet. The different voltage values indicate different connection scenario. When unconnected, the proximity pilot signal (PP1, PP2) has a first voltage value being a bias voltage divided by the voltage divider of resistors R4 and R5. In one embodiment, the bias voltage is the Vdd voltage of the module 40. When the EVSE cordset is connected to one of the charging inlet A or B and the pins of the EVSE cordset have made electrical contact with the charging inlet, resistors R6 and R7 (provided in the EVSE cordset) are placed in parallel with resistors R4 and R5 and the proximity pilot signal (PP1, PP2) has a second voltage value accordingly. In some cases, the EVSE cordset may have a button that operates the switch S3. When engaged, the switch S3 further modifies the voltage divider of resistors R4, R5, R6 and R7 and the proximity pilot signal (PP1, PP2) has a third voltage value accordingly. The control pilot monitoring module 40 detects the voltage level of the proximity pilot signal (PP1, PP2) to determine whether a connection to an EVSE has been made at charging inlet A or charging inlet B and whether certain button has been pressed at the cordset.

In embodiments of the present invention, the bias voltage to resistor R4 (R4-1, R4-2) is provided on an output terminal 41 (41-1 or 41-2) of the control pilot monitoring module 40 through a bias voltage switch (Vb SW). For instance, a first bias voltage switch is coupled to output terminal 41-1 for the proximity pilot line 59 and a second bias voltage switch is coupled to the output terminal 41-2 for the proximity pilot line 60. In particular, the control logic of the control pilot monitoring module 40 implements a digital logic state machine to control the bias voltage switches so that the bias voltage is only applied to the output terminal 41 during measurement of the proximity pilot signals (PP1, PP2). For instance, the measurement of the proximity pilot signals (PP1, PP2) is performed periodically, such as once every 40ms during the low power mode. In that case, the control logic of module 40 controls the bias voltage switch to apply the bias voltage (e.g. Vdd) to the output terminal 41 only during the measurement time. After the bias voltage is applied to the output terminal 41, the control logic of module 40 waits for a stabilization time. After the stabilization time, the measurement of the proximity pilot signals (PP1, PP2) is then performed. For example, the voltage level of the proximity pilot signals (PP1, PP2) are measured and compared against predefined threshold voltage values. After the measurement is completed, the bias voltage switch is switched off so that the bias voltage is no longer applied to the output terminal 41. In this manner, for the majority of time, there is no current flow on the proximity pilot lines 59, 60, which results in lower current consumption and conserve the vehicle battery during the low power mode.

The control pilot monitoring module 40 further monitors the control pilot signals (CP1, CP2). The control pilot signal is a communication signal between a controller in the EVSE and the on-board charger 25 of the electric vehicle 20. The control pilot signal is monitored by both the EVSE and the on-board charger to control and manage the charging process, such as to communicate about the parameters and status of the charging process. For instance, the control pilot signal is used to negotiate the charging level between the EVSE and the on-board charger. The EVSE may use the control pilot signal to inform the on-board charger of the EVSE's maximum charging current capability. The control pilot signal is also used by the on-board charger to signal to the EVSE that the electric vehicle is ready to start the charging operation. In general, the control pilot signal is used by the EVSE and the on-board charger to signal the starting and ending of a charging cycle and any errors.

In operation, only one of charging inlet A or charging inlet B will be connected to the EVSE. The control pilot monitoring module 40 detects the connected charging inlet, referred herein as the "active charging inlet," by monitoring the voltage level of the control pilot signals CP1 and CP2. When an active charging inlet is detected, the charge controller 45 of the on-board charger 25 is activated, awaken or alerted to control the charging process. In this manner, the control pilot monitoring module 40 and the charge controller 45 operate cooperatively to perform the charging function for the electric vehicle. The control pilot monitoring module 40 performs monitoring and measurement functions of the analog signals from the charging inlets and stores measured data in digital form into internal registers. The charge controller 45 handles the processing of the measured parameters and control of the charging operation. The charge controller 45 further processes the communication signals, including information for payment and other functions, as will be described in more details below.

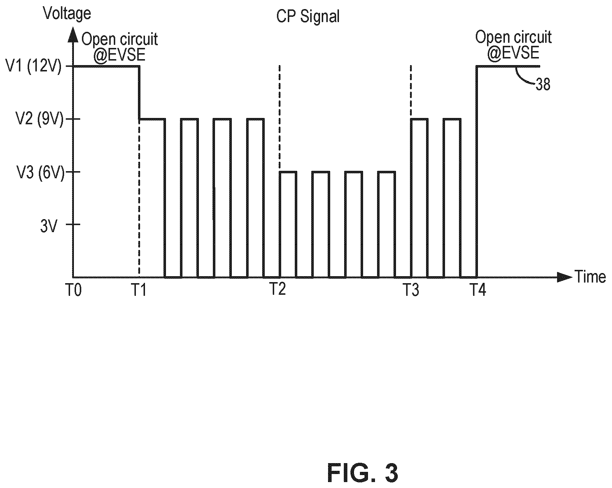

The control pilot signal is generated by the EVSE and transmitted on the cordset to the on-board charger 25. The EVSE controller and the on-board charger 25 both monitor the signal level of the control pilot signal to determine the current status of the control pilot signal based on the voltage measurement. Figure 3 illustrates the signal waveform of a representative control pilot signal in some examples. In Figure 3, only the positive voltage portion of the PWM signal is shown for illustrative purposes. It is understood that the control pilot signal may have a voltage swing from positive voltages to negative voltages. Referring to Figure 3, a signal waveform 38 illustrates the control pilot signal behavior in some examples. When disconnected to an electric vehicle, the EVSE connects the control pilot signal to a DC voltage value of V1, which can be +12V or -12V. At each charging inlet, the control pilot signal line (node 51, 55) will be at near 0V due to a resistor R3 (R3-1 and R3-2) connecting each CP line to ground. The EVSE controller monitors and detects a +/- 12V on the control pilot line of its cordset to indicate that the cordset is disengaged from the electric vehicle (such as at time T0 in Figure 3). Meanwhile, the CP monitoring module 40 of the on board charger 25 of the electric vehicle detects a 0V on the control pilot lines to determine that neither of the charging inlets is connected to the EVSE.

Once the EVSE cordset is connected to one of the charging inlet A or B (such as at time T1 in Figure 3), the +12V generated by the EVSE is divided down by the voltage divider formed by a resistor R1 (not shown) in the EVSE cordset and the resistor R3 at the charging inlet. The voltage level of the control pilot signal of the active charging inlet drops to a voltage level of V2, which can be +9V. The control pilot signal having the V2 voltage level indicates to the EVSE controller and to the control pilot monitoring module 40 that an active charging inlet (A or B) is connected to the EVSE and a valid control pilot signal is being detected. Meanwhile, the proximity pilot signal will indicate the same connection status. At this time, the EVSE generates a pulse-width modulation (PWM) signal as the control pilot signal and uses the duty cycle or pulse width of the PWM signal to indicate to the on-board charger the maximum current that is available from the charging station. For example, the EVSE generates the control pilot signal as a square wave PWM signal of 1kHz. The pulse width of the PWM signal is modulated to describe the maximum current available from the EVSE. In other words, the EVSE controller modulates or changes the pulse width of the control pilot signal within a clock period to indicate different maximum current availability from the charging station.

In embodiments of the present invention, in order to conserve the electric vehicle's battery, the charge controller 45 of the on-board charger 25 is normally in a power down mode or in a sleep mode. In the present description, the power down mode refers to the charge controller 45 being in a shut down state, such as by not providing the power supply voltage Vps2 that supplies the charge controller or by setting the power supply voltage Vps2 to 0V. In the present description, the sleep mode refers to the charge controller 45 being powered up, such as by receiving a suitable power supply voltage Vps2 (e.g. 5V), but the charge controller is put in a low power state to consume minimal power. Referring to Figure 2, in the present embodiment, the control pilot monitoring module 40 generates an inhibit signal (node 66) which is coupled to the DC-DC converter 50 to enable or disable (inhibiting) the DC-DC converter 50. DC-DC converter 50 generates the power supply voltage Vps2 (5V) for the charge controller 45. Accordingly, the inhibit signal (node 66) is asserted to disable the DC-DC converter 50 and thereby shutting down the charge controller by not providing the power supply voltage. The charge controller will then be put in the power down mode. On the other hand, the inhibit signal (node 66) is deasserted to enable the DC-DC converter 50 and thereby providing the power supply voltage Vps2 to the charge controller and powering up the charge controller. With the charge controller 45 being powered up, the charge controller may be put in the sleep mode by its own control circuit or by external control signals.

While the charge controller 45 being in the power down mode or in the sleep mode, the control pilot monitoring module 40 performs the monitoring function of the control pilot signals of the charging inlets. In response to a valid control pilot signal being detected on an active charging inlet (A or B), the control pilot monitoring module 40 operates to activate or wake up the charge controller 45. In embodiments of the present invention, the control pilot monitoring module 40 may generate different types of wake-up signals to activate or wake up the charge controller. In some embodiments, a first type of wake-up signal is the inhibit signal. In one embodiment, the control pilot monitoring module 40 deasserts the Inhibit signal (node 66) to enable the DC-DC converter 50 so that the charge controller 45 is powered up with the power supply voltage Vps2 (5V). In other embodiments, a second type of wake-up signal is an interrupt signal (node 65). In one embodiment, the charge controller 45 is in the sleep mode and the control pilot monitoring module 40 asserts the interrupt signal (node 65) which is provided to the charge controller 45 to wake up the charge controller 45 from the sleep mode. The charge controller 45, when activated upon power up or upon exiting the sleep mode, begins to manage and control the charging process. By putting the charge controller 45 in the power down mode or in the sleep mode most of the time, significant reduction in power consumption can be realized.

The control pilot monitoring module 40 monitors the signal level or voltage level of the control pilot signal of the charging inlets (A and B) to determine that one of the charging inlets (A or B) has made a connection to an EVSE. The control pilot monitoring module 40 further detects the duty cycle of the PWM signal on the control pilot line to determine the maximum current availability of the charging station. The control pilot monitoring module 40 stores the measured duty cycle information in its internal registers. Upon the charge controller 45 being activated or awaken, the charge controller 45 may obtain the maximum current information and/or other charging parameters by reading the internal registers of the control pilot monitoring module 40.

In response to the charge controller 45 being informed of a connection of an active charging inlet to the EVSE, the charge controller 45 may issue a control signal to close a switch S2 (S2-1, S2-2) when the charge controller determines that the electric vehicle is ready to accept energy from the EVSE (such as at time T2 in Figure 3). Closing the switch S2 places resistor R2 (R2-1, R2-2) in parallel with resistor R3 which further reduces the voltage level of the control pilot signal of the active charging inlet to a voltage level of V3, which can be +6V. The EVSE obtains the status of the charging operation by monitoring the control pilot signal and when the control pilot signal has a voltage level indicating the electric vehicle is ready to accept energy from the EVSE (for example, the control pilot signal has a voltage level of V3, the EVSE provides power on the power lines to the electric vehicle, as described with reference to Figure 1.

At the end of the charging cycle, the charge controller 45 may generate the control signal to open switch S2 (S2-1, S2-2) of the active charging inlet. The signal level of the control pilot signal changes back to the voltage level V2 (such as at time T3 in Figure 3) to indicate the end of the charging cycle. The EVSE controller, upon detecting the signal level of the control pilot signal having returned to the V2 voltage level, terminates providing power to the electric vehicle. When the cordset is disconnected from the charging inlet, the control pilot signal at the EVSE returns to a DC voltage of +12V (such as at time T4 in Figure 3).

Returning to Figure 2, in some embodiments, in addition to the control signals provided on the proximity pilot line and the control pilot line in the form of voltage levels, the EVSE may use an additional signaling scheme to transmit additional communication signals on the control pilot line. In some embodiments, the control pilot line further carries a power-line communication (PLC) signal which is used to enable the EVSE and the electric vehicle to negotiate charging sessions, allowing various charging profiles and potentially to negotiate payment. In particular, the PLC signal is transmitted on top of the analog voltage signal that is the control pilot signal on the control pilot line. In the present embodiment, the PLC signal is a differential signal including a positive PLC signal PLC+ and a negative PLC signal PLC-. The control pilot signal CP1 or CP2 is AC coupled through a capacitor C2 (C2-1, C2-2) to extract the AC component of the control pilot signal as the power-line communication signal PLC+. The protective earth signal PE1 or PE2 is AC coupled through a capacitor C3 (C3-1, C3-2) to extract the AC component on the protective earth signal as the power-line communication signal PLC-.

The power-line communication signals for both charging inlets are coupled to the control pilot monitoring module 40. That is, the differential PLC signals PLC1+, PLC1-, PLC2+, and PLC2- (on nodes 53, 54, 57, 58) are coupled to the control pilot monitoring module 40. In practice, only one charging inlet will be active at a time. In embodiments of the present invention, the control pilot monitoring module 40 includes a switch circuit to select the PLC signals from the active charging inlet and switchably connect the PLC signals of the active charging inlet to the charge controller 45. More specifically, the selected PLC signals are provided as output signals onto signal lines 61. In one example, the PLC signals are transmitted using the HomePlug Green Phy (HPGP) standard and the selected PLC signals are provided to a HPGP PLC modem 42 for processing, such as to convert the HPGP signals into serial interface signals 62. The charge controller 45 receives the serial interface signals for processing and decoding. In this manner, the on-board charger 25 and the EVSE communicate using the PLC signals transmitted over the control pilot line to negotiate further details of the charging session. In some embodiments, the PLC modem 42 may provide an attenuation control signal on signal line 64 to the control pilot monitoring module 40 to adjust the signal level of the selected PLC signals being provided to the modem.

In the present embodiment, the control pilot monitoring module 40 is specifically adapted for use in an electric vehicle with two or more charging inlets. Specifically, by using a switch circuit to select the PLC signals associated with the active charging inlet, the on-board charger can be implemented using a single PLC modem and a single charge controller. In conventional designs, a discrete component switch and separate and individual PLC modem and charge controller are provided for each charging inlet, leading to additional system cost and complexity. The control pilot monitoring module 40 enables a single PLC modem and a single charge controller to be used for multiple charging inlet electric vehicles.

In the present embodiment, two charging inlets are shown but the invention is not limited thereto. One of ordinary skill in the art would appreciate that the control pilot monitoring module of the present invention can be adapted to an electric vehicle with any number of charging inlets. For instance, the switch circuit can be configured to select the active charging inlet out of two or more charging inlets.

The charge controller 45 includes a controller logic 46 and a memory 48. The controller logic 46 executes instructions to manage the charging operation of the on-board charger. The memory 48 may include a status memory 48A for storing status data and a configuration memory 48B for storing configuration data. The charge controller 45 may use a serial interface bus 67 to communicate with the control pilot monitoring module 40 to obtain status data detected or measured by the module 40. The charge controller 45 may also use the serial interface bus 67 to provide configuration data from its configuration memory 48B to the control pilot monitoring module 40 to set configurable values for various monitoring or comparing functions performed at the module 40. The serial interface bus 67 is implemented as a serial peripheral interface (SPI) with the charge controller 45 being the SPI master and the control pilot monitoring module 40 being the SPI slave. The charge controller 45 sends transactions over the SPI bus (serial interface bus 67) for writing the internal registers of the control pilot monitoring module 40. For instance, each transaction includes an address that identifies the target register (or registers) in the module 40 and a payload. The payload is the data that shall be written to the register(s). The charge controller 45 may also initiate read transactions over the SPI bus (serial interface bus 67) to obtain information from the module 40.

In some examples, the configuration data provided by the charge controller 45 may be used to configure the overall behavior of the control pilot monitoring module 40. For example, the charge controller may provide one set of configuration data for the CCS standard and a different set of configuration data for the GB/T standard. The charge controller 45 may configure the control pilot monitoring module 40 to the appropriate standard upon power up of the module 40. The charge controller 45 may further provide configuration data to module 40 for use in real-time, that is during the operation of module 40. For example, the charge controller 45 may provide configuration data to module 40 for responding to indications that are detected during the charging process. In one example, when the GB/T standard is used, the module 40 detects if the AC charging signals are active or if the DC charging signals are active and store the detection indication in its internal registers. The charge controller, upon reading the detection indication from module 40, provide configuration data to the module 40 to configure module 40 for operation based on the AC signals or based on the DC signals for the rest of the present charging process.

In embodiments of the present invention, the control pilot monitoring module 40 measures the control pilot signals to determine various status with respect to the charging inlets or the charging process. For example, the control pilot signal has a 0V voltage level to indicate a standby state where the electric vehicle is not connected to the EVSE. The control pilot signal has a V2 voltage level (e.g. 9V) to indicate a connected state where a changing inlet is connected to the EVSE. The control pilot signal has a V3 voltage level (e.g. 6V) to indicate a ready state where the charge controller informs the EVSE that the electric vehicle is ready to accept electricity. Other state indicators can also be provided using different voltage levels on the control pilot signal, such as an error state or an EVSE shutdown state. The control pilot monitoring module 40 determines the status or state of the charging process and stores the status data in its internal register. The charge controller 45 may read the status data from module 40 using the serial interface 67 and stores the status data into its own status memory 48A.

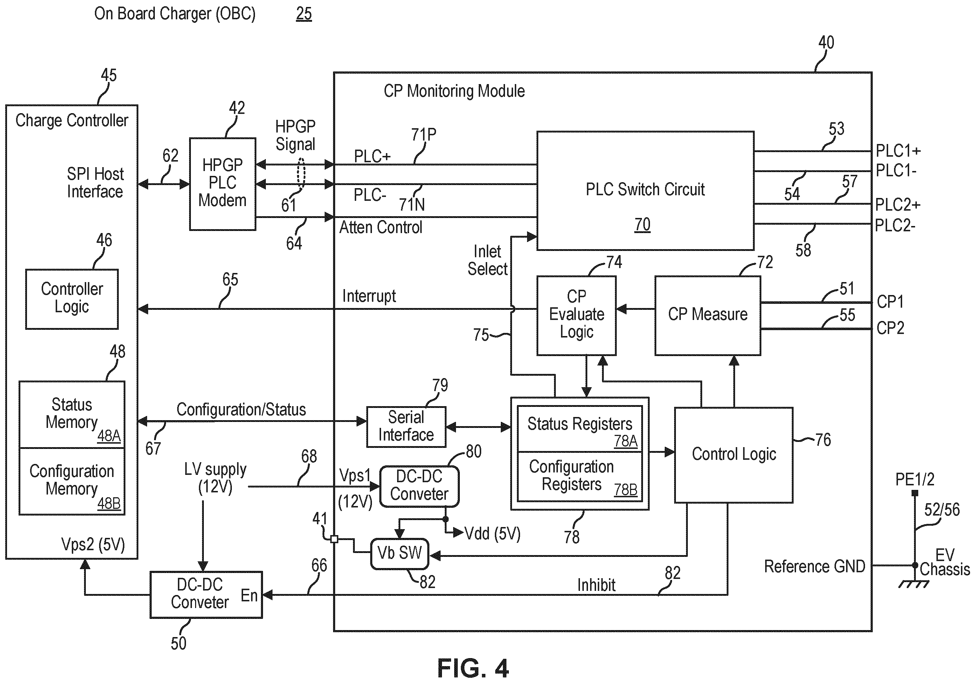

As described above, the on-board charger incorporates the control pilot monitoring module to perform the control pilot signal monitoring function so that the on-board charger can put the charge controller in the power down or sleep mode to conserve energy. The control pilot monitoring module also support dual charging inlets by incorporating a switch circuit to switchably connect the active charging inlet to the charge controller. The construction of the control pilot monitoring module will now be described in more detail. Figure 4 is a block diagram of the control pilot monitoring module in embodiments of the present invention. Referring to Figure 4, the control pilot monitoring module 40 includes a CP measure circuit 72, a CP evaluate logic circuit 74, a set of registers 78 and a control logic circuit 76. The control logic 76 may implement state machines for controlling the operations of the module 40. The CP measure circuit 72 is coupled to receive the control pilot signals CP1 and CP2 (on nodes 51, 55) from the dual charging inlets A and B. In some embodiments, the CP measure circuit 72 receives signals indicative of the positive voltage portion and the negative voltage portion of the control pilot signals CP1 and CP2, as will be explained in more details below. The CP measures circuit 72 detects the signal levels and the PWM characteristics of the control pilot signals CP1 and CP2. For example, the CP measure circuit 72 detects the positive voltage level and/or the negative voltage level of the control pilot signals. The CP measure circuit 72 further detects the duty cycle of the control pilot signals, such as by counting or measuring the pulse width of the PWM signal transmitted on the control pilot lines.

The CP evaluate logic circuit 74 receives the detected signal levels as well as the PWM characteristics of the control pilot signals from the CP measure circuit 72 and evaluate the detected signal values to determine the status of the charging inlets and also the detected charging information. The CP evaluate logic circuit 74 stores the detected status of the charging inlets and the detected charging parameters in status registers 78A. In some embodiments, the CP evaluate logic circuit 74 stores the status of the charging inlets which can include the standby state, the connected state and the ready state, as discussed above, in the status registers 78A. For example, the CP evaluate logic circuit 74 may determine from the detected control pilot signal levels that one of the charging inlets A or B has been connected to the EVSE. That is, the CP evaluate logic circuit 74 determines from the measured signal levels from the CP measure circuit 72 that one of the charging inlets A and B has become an active charging inlet. For example, the CP evaluate logic circuit 74 may detect a voltage level V2 on the control pilot signal CP1 and a voltage level of 0V on the control pilot signal CP2. In that case, the CP evaluate logic circuit 74 determines that the charging inlet A has become an active charging inlet. The CP evaluate logic circuit 74 stores the status of the charging inlets in the status registers 78A. The CP evaluate logic circuit 74 may also store the measured signal data, such as the measured voltage value and the measured duty cycle value in the status registers 78A. The CP evaluate logic circuit 74 also determines from the measured PWM characteristics the duty cycle of the control pilot signal and stores the duty cycle information in the status register 78A.

In response to detecting a connected status for a charging inlet, the control pilot monitoring module 40 may implement one of several means to activate or awaken or otherwise alert the charge controller. First, the control logic circuit 76 of the control pilot monitoring module 40 generates the inhibit signal on node 66. The inhibit signal is provided to enable or disable the DC-DC converter 50 which generate the power supply voltage Vps2 for the charge controller 45, as described above. In some embodiments, the control logic circuit 76 has asserted the inhibit signal and the DC-DC converter 50 has been disabled so that the charge controller 45 is in a power down mode. The control logic circuit 76 monitors the status registers 78A. In response to the control logic circuit detecting that the status of a charging inlet (A or B) has changed to an active status, the control logic circuit 76 will then deassert the inhibit signal on node 66. As such, the DC-DC converter 50 is enabled to generate the power supply voltage Vps2 and the charge controller 45 is powered up. In this manner, the charge controller 45 exits the power down mode and start to process the monitored data and to start controlling the charging process.

In embodiments of the present invention, the control pilot monitoring module 40 includes a DC-DC converter 80 which receives the power supply voltage Vps1 (e.g. 12V) from the low voltage supply (node 68) and generate an internal power supply voltage Vdd (e.g. 5V) for supplying the internal circuitry of the module 40. In the present embodiment, the Vdd voltage is also used as the bias voltage for the proximity pilot signal (Figure 2). To that end, a bias voltage switch (Vb SW) 82 is provided to switchably connect the bias voltage (Vdd) to the output terminal 41. The control logic circuit 76 generates the control signal for turning on and off the bias voltage switch (Vb SW) 82. As described above with reference to Figure 2, under the control of the control logic circuit 76, the bias voltage switch 82 is turned on intermittently to connect the bias voltage (e.g. Vdd) to the resistor R4 for proximity detection. In Figure 4, a single bias voltage switch 82 and a single output terminal 41 are illustrated for simplicity purpose. It is understood that in a dual charging inlet configuration, there will be a set of two bias voltage switches 82 providing the bias voltage to respective output terminals, as shown in Figure 2.

The inhibit signal provides a first means to activate a charge controller that has been placed in the power down mode. In another scenario, the charge controller 45 has been powered up but is placed in a sleep or low power mode and the control pilot monitoring module 40 provides a second means to wake up the charge controller. In some embodiments, the CP evaluate logic circuit 74, upon detecting that one of the charging inlet has become active, generates a control signal and transmits the control signal on a signal line 65 to the charge controller 45. In response to the control signal, the charge controller 45 exits from the sleep mode and resume control to manage the charging process. In some embodiments, the control signal is an interrupt signal provided to the controller logic circuit 46 of the charge controller 45. In some embodiments, the charge controller 45 incorporates a microcontroller circuit (MCU) as the controller logic circuit. The interrupt signal is provided to the microcontroller to wake up or activate the microcontroller. In this manner, the microcontroller can be kept in an idle state or put in sleep mode while the electric vehicle battery is not being recharged and is made active in response to the interrupt signal from the control pilot monitoring module 40. Appreciable power saving can be realized by keeping the microcontroller in a sleep mode, without needing to be powered up periodically to perform the monitoring function.

In embodiments of the present invention, the control pilot monitoring module 40 further implements a third means to wake up or alert the charge controller 45 in response to detection of certain predefined condition. For example, the control signal can be the interrupt signal and is provided on signal line 65 to the charge controller 45. The charge controller maybe in a lower power or sleep mode or the charge controller may be powered up and operating. The control pilot monitoring module 40 provides the control signal to either wake up or to alert the charge controller 45 of the detected changing condition. The charge controller, upon being awaken or alerted, may then transmit transactions on the serial interface bus 67 to read the status data from the status registers 78A of the module 40. The serial interface bus 67 may be coupled to a serial interface circuit 79 for communication with the set of registers 78. In this manner, the charge controller 45 may respond or react to changing conditions detected by the control pilot monitoring module 40.

In one embodiment, the control pilot monitoring module 40 detects changes in the duty cycle of the control pilot signal and generates the control signal to wake up or alert the charge controller. In particular, the EVSE provides an indication of its maximum current capability using the pulse width or the duty cycle of the PWM signal transmitted on the control pilot line. The CP measure circuit 72 detects the duty cycle on the control pilot signal of the active charging inlet. The CP evaluate logic circuit 74 determines if the duty cycle is at a given threshold value. For instance, in some cases, the EVSE may only be capable of providing a low level of charging current. In that case, the measured duty cycle may indicate a value lower than the threshold value. The detected duty cycle value or the status of the duty cycle value (lower than or above the threshold value) is stored in the status registers 78A for the charge controller 45 to read.

The charge controller 45, upon obtaining the duty cycle status data, may determine that the available current is too low for charging. The charge controller 45 may decide to return to the sleep mode and wait until the EVSE can support a sufficiently high charging current. In embodiments of the present invention, the control pilot monitoring module 40 continues to monitor the control pilot lines. The CP measure circuit 72 continues to measure or detect the duty cycle of the control pilot signal on the active charging inlet. The CP evaluate logic circuit 74 continues to evaluate the measured duty cycle to determine if the duty cycle increased and has reached or crossed the threshold value. In response to the CP evaluate logic circuit 74 determining that the measured duty cycle has now reached or exceeded the threshold value, the CP evaluate logic circuit 74 generates the control signal, such as the interrupt signal, on the signal line 65 to the charge controller 45. The charge controller 45 is awaken by the interrupt signal and transitions out of the sleep mode to begin managing the charging process. In this way, the control pilot monitoring module 40 provides alerts to the charge controller based on certain predefined conditions to alleviate the charge controller from having to be in active mode to monitor those changing conditions.

In the present description, the control pilot monitoring module 40 implements several means to activate or awaken the charge controller in response to detection of an active charging inlet or other conditions. It is understood that it is not necessary to implement all of the means described above. One or more of the means can be implemented in different embodiments of the control pilot monitoring module to provide the desired activate or wake up functions.

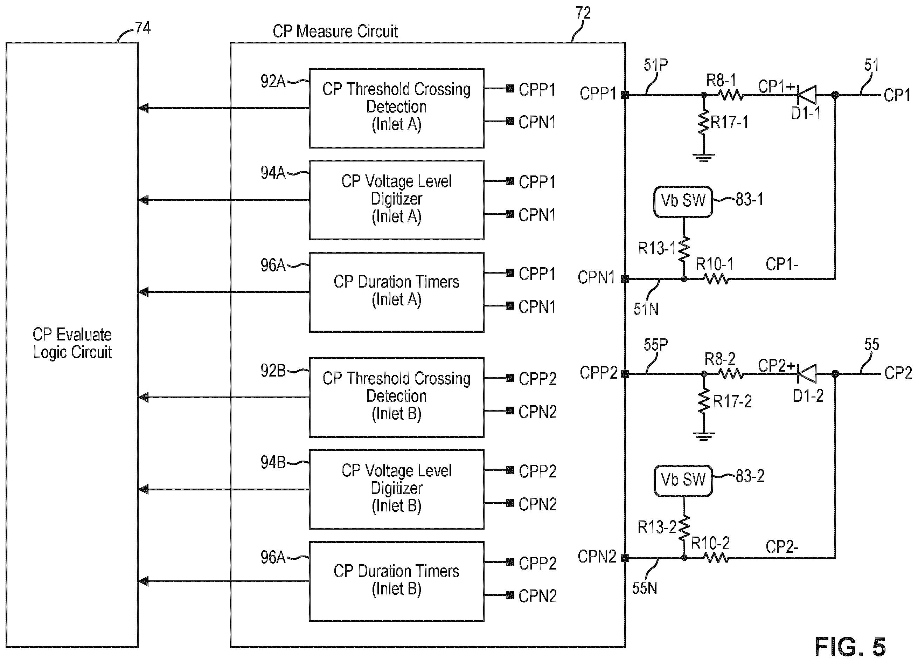

The construction of the CP measure circuit 72 will now be described. Figure 5 illustrates the schematic diagram of the CP measure circuit in some embodiments. Referring to Figure 5, the CP measure circuit 72 includes a first set of measurement circuits 92A, 94A, 96A for the charging inlet A and a second set of measurement circuits 92B, 94B, 96B for the charging inlet B. The two sets of measurement circuits are implemented in the same manner and the following description will discuss only one set of the measurement circuits. It is understood that the same description applies to the other set of the measurement circuits.

In embodiments of the present invention, each set of measurement circuits includes three measurement functions. For example, the set of measurement circuits may include a control pilot threshold crossing detection circuit 92A, a control pilot voltage level digitizer 94A and a control pilot duration timers 96A. Furthermore, in embodiments of the present invention, each measurement circuit includes two instances of the circuit - one instance for measuring the positive voltage portion of the control pilot signal (CPP) and one instance for measuring the negative voltage portion of the control pilot signal (CPN). In Figure 5, for simplicity purposes, each measurement circuit 92, 94, or 96 (A, B) are shown with two inputs CPP and CPN (CPP1/2, CPN1/2). It is understood that each measurement circuit 92, 94, or 96 shown in Figure 5 actually denotes two instances of the same circuit for measuring the positive voltage portion and negative voltage portion of the control pilot signal.

As described above, the control pilot signal has a voltage swing of +/-12V. Furthermore, with voltage transients, the control pilot signal may have a voltage swing between +/- 20V. However, the circuitry of the control pilot monitoring module 40 is often operated in the voltage range of 0-5V. In embodiments of the present invention, the control pilot signal is coupled to circuitry to generate a first CP signal CPP indicative of the positive voltage portion of the CP signal and a second CP signal CPN indicative of the negative voltage portion of the CP signal. Furthermore, the first CP signal CPP and the second CP signal CPN are scaled down to a positive voltage range within the operating voltage of the module 40. Figure 5 illustrates the circuitry for generating the first and second CP signals CPP and CPN. Referring still to Figure 5, the control pilot signal CP1 or CP2 is transmitted onto the control pilot line of the charging inlet. The control pilot signal passes through a diode D1 (D1-1, D1-2) which removes the negative voltage excursions of the control pilot signal. The output of the diode D1 is then only the positive voltage swing of the control pilot signal CP1+ or CP2+. A voltage divider R8 and R17 scales down the positive voltage swing to generate the first CP signal CPP1 at a node 51P. In some embodiments, the voltage divider R8 and R17 divides the CP1+ signal by 5 so that the signal CPP1 is one-fifth of the CP1+ signal. Accordingly, a 20V positive voltage signal will be scaled down to a 4V CPP1 signal to be provided to the CP measure circuit 72.

Meanwhile, the control pilot signal CP1 or CP2 is coupled to a voltage divider R10 and R13 that are connected to the Vdd voltage through a switch (Vdd switch 83). The Vdd switch 83 connects the Vdd voltage to the resistor R13 whenever measurements are to be made to reduce excess current flow. In some embodiments, the voltage divider R13 and R10 divides the CP1-signal by 6 so that the signal CPN1 is one-sixth of the CP1- signal. Accordingly, a 20V negative voltage signal plus the 5V at the voltage divided results in a 25V swing on the negative voltage portion and will be scaled down to a 4V CPN1 signal to be provided to the CP measure circuit 72. Note that for the negative voltage portion of the CP signal, internal ESD protection diode prevents the CPN signal to goes into negative voltage values. By connecting the voltage divider resistor R13 to the Vdd voltage (5V), the negative voltage portion of the CP signal is scaled and flipped into a positive voltage signal CPN within the operating voltage of the module 40.

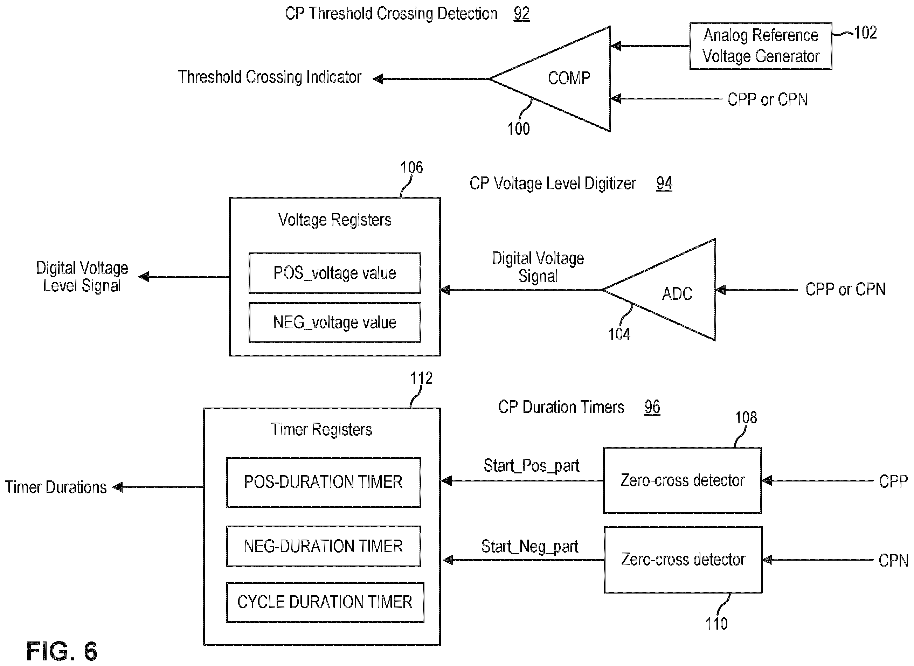

As thus configured, the CP signals CP1 and CP2 are thus processed into the first CP signal CPP1, CPP2 and the second CP signal CPN1, CPN2. The first and second CP signals for each charging inlet are then provided to the CP measure circuit 72 to perform the control pilot signal measurements. Figure 6 is a schematic diagram illustrating one set of the measurement circuits in the CP measure circuit in embodiments of the present invention. Referring to Figure 6, the measurement circuits include a CP threshold crossing detection circuit 92 which includes a comparator 100 for comparing the first CP signal CPP in one instance of the circuit and comparing the second CP signal CPN in the second instance of the circuit. Each CP signal is compared to its respective reference voltage provided by an analog reference voltage generator 102. The analog reference voltage generator 102 can be a digital-to-analog converter (DAC) for converting a digital code indicative of a given reference voltage level to an analog voltage value. The comparator 100 compares the first or second CP signal CPP/CPN to the respective reference voltage and provide an output signal being the threshold crossing indicator. The reference voltage level can be any voltage threshold to be measured, for example, voltage levels V1,V2 and V3 (12V, 9V and 6V) as discussed above. The threshold crossing indicator provides an indication of the status of the charging inlet. As described above, the different voltage levels of the control pilot signal indicate different status of the charging inlet.

The measurement circuits also include a CP voltage level digitizer 94 which includes an analog-to-digital converter (ADC) 104 for receiving the first CP signal CPP in one instance and comparing the second CP signal CPN in the second instance. The ADC 104 receives the analog voltage level of the CPP or CPN signal and digitize the analog voltage level into a digital voltage signal being a multi-bit digital word indicative of the voltage level of the input signal. The digital voltage signals for the positive voltage portion of the CP signal and the negative voltage portion of the CP signal are stored in voltage registers 106. The digital voltage signals can then be read out by the CP evaluate logic circuit 74 to evaluate the control pilot signal level and to determine the state or status of the charging inlet thereof. In some embodiments, the registers 106 are part of the set of registers 78 (Figure 4) and the charge controller 45 can transmit transactions on the serial interface bus 67 to read the digital voltage signals indicative of the positive and negative voltage levels of the control pilot signal.

The measurement circuits also include CP duration timers 96. A first zero-cross detector 108 receives the first CP signal CPP and detect a time when the positive voltage portion of the control pilot signal crosses the zero voltage value. The first zero-cross detector 108 generates an output signal Start_Pos_part indicating the start of the positive voltage portion of the control pilot signal. A second zero-cross detector 110 receives the second CP signal CPN and detect a time when the negative voltage portion of the control pilot signal crosses the zero voltage value. The second zero-cross detector 110 generates an output signal Start_Neg_part indicating the start of the negative voltage portion of the control pilot signal. The CP duration timers 96 further includes timing registers 112 including a set of counters or timers. A positive duration timer receives the Start_Pos_part signal and counts the duration of the Start_Pos_part signal. A negative duration timer receives the Start_Neg_part signal and counts the duration of the Start_Neg_part signal. Finally, a cycle duration timer receives both the Start_Pos_part signal and the Start_Neg_part signal and counts the duration of both signal which is indicative of the period or clock cycle of the PWM signal on the control pilot line. The measured time durations are stored in the timing registers 112. The charge controller 45 can transmit transactions on the serial interface bus 67 to read the positive voltage portion time duration, negative voltage portion time duration and also the measured clock cycle duration. In some embodiments, the duty cycle of the control pilot signal is calculated as the positive voltage portion time duration divided by the sum of the positive and negative voltage portion time durations.

In some embodiments, the comparator threshold voltages, the gain of the ADC 104 and other parameters are configurable to allow the CP measure circuit to be adapted for different electric vehicle standards. Referring back to Figure 4, in some embodiments, a set of configuration registers 78B is used to store the configuration data for the control pilot monitoring module 40. For example, the charge controller 45 may provide configuration data stored in its own configuration memory 48B to the control pilot monitoring module 40. The charge controller 45 may transmit the configuration data on the serial bus 67 to the module 40 and the configuration data is stored in the configuration registers 78B. The control logic circuit 76 of the control pilot monitoring module 40 reads the configuration data from the configuration registers 78B to configure the CP measure circuit 72 and the CP evaluate logic circuit 74 in response to the configuration data.

In the present embodiment, the control pilot monitoring module 40 further includes a PLC switch circuit 70 to switchably connect the PLC signals of the active charging inlet to the charge controller 45. As described above, the control pilot signal may carry additional data using applicable communication protocols, such as power-line communication. In the present embodiment, the PLC signals are differential signals. The differential PLC signals are extracted from the control pilot signal and the protective earth signal by AC coupling through respective capacitors. The PLC switch circuit 70 is coupled to receive the differential PLC signals from the charging inlets A and B, including PLC signals PLC1+ and PLC1- associated with charging inlet A and PLC signals PLC2+ and PLC2- associated with charging inlet B.

In operation, the CP measure circuit 72 measures the voltage signal levels of the control pilot lines CP1 and CP2 from charging inlet A and charging inlet B, as described above. The CP evaluate logic 74 evaluate the status of the CP signals based on the measurements at the CP measure circuit 72 and stores the status data of the charging inlets in the status registers 78A. In some embodiments, the CP evaluate logic 74 also stores the measured data values, such as the measured signal levels and the measured PWM duty cycle values of the control pilot signals in the status registers 78A. In response to detection of an active charging inlet, the control logic 76 may deassert the inhibit signal (node 66) to activate the DC-DC converter 50 so as to power up the charge controller 45 or in the alternate, the CP evaluate logic 74 issues the interrupt signal (node 65) to wake up the charge controller 45 from the sleep mode, as described above.

The charge controller 45, upon being powered up or awaken, reads the status registers 78A of the control pilot monitoring module 40 using the serial interface 67. The charge controller 45 determines from the status data and signal data stored in the 78A, which may include data from the proximity pilot signals and the control pilot signals, which one of the charging inlets has become an active charging inlet. The charge controller 45 will then transmit updated configuration data using the serial interface 67 where the configuration data is used to set an inlet select value in the configuration registers 78B. The PLC switch circuit 70 accesses the configuration registers 78B through signal line 75 to read the value of the inlet select value. In this manner, the PLC switch circuit 70 is configured by the charge controller 45 to select the active charging inlet to obtain the PLC data signals transmitted on the active charging inlet.

With the inlet select value in the configuration registers 78B thus configured or updated by the charge controller 45, the PLC switch circuit 70 reads the inlet select value stored in the configuration registers on signal line 75 to determine which of the charging inlet A or B is the active charging inlet. Using the inlet select value, the PLC switch circuit 70 connects the differential PLC signals of the active charging inlet to the output terminals 71P and 71N as the output PLC signals PLC+ and PLC-. As explained above, the output PLC signals PLC+ and PLC- are provided to a PLC modem 42 (on signal lines 61) which converts the PLC signals for transmitting onto the signal line 62 to the charge controller 45. In one embodiment, the signal line 62 is a serial data interface. In some embodiments, the PLC modem 42 may provide an attenuation control signal on a signal line 64 to the PLC switch circuit 70 to adjust the signal level of the output PLC signals. In some embodiments, the PLC modem 42 implements an industrial standard communication protocol, such as the HomePlug Green PHY protocol.

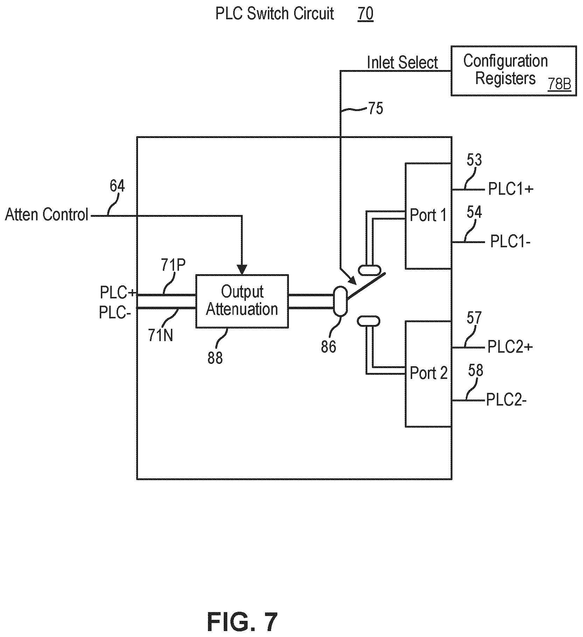

Figure 7 is a schematic diagram of a PLC switch circuit which can be implemented in the control pilot monitoring module of Figure 4 in embodiments of the present invention. Referring to Figure 7, the PLC switch circuit 70 receives the input differential PLC signals from the charging inlets A and B (PLC signals PLC1+ and PLC1- and PLC signals PLC2+ and PLC2-) on nodes 53, 54, 57 and 58 respectively. In particular, the differential PLC signals from charging inlet A (PLC1+ and PLC1- on nodes 53 and 54) are coupled to a first input port (Port 1); and the differential PLC signals from charging inlet B (PLC2+ and PLC2- on nodes 57 and 58) are coupled to a second input port (Port 2). A switch 86 connects to either Port 1 or Port 2 under the control of the inlet select signal received from the configuration registers 78B. The switch 86 is switchably connected to the differential PLC signals for the active charging part, as indicated by the inlet select signal. The selected PLC signals is coupled to an output attenuation circuit 88. Output attenuation circuit 88 receives an attenuation control signal on the signal line 64 which to adjust the signal levels of the selected PLC signals. In one embodiment, the attenuation control signal is provided by the PLC modem 42 (Fig. 4). The output PLC signals PLC+ and PLC- are then provided on the output nodes 71P and 71N.

By using the PLC switch circuit 70 to switchably connect the PLC signals from the active charging inlet to the charge controller 45, the on-board charger 25 can use a single charge controller and a single PLC modem to support two charging inlets. Significant cost savings in system implementation is realized. The single charge controller manages the charging operation in a dual charging inlet electric vehicle when one of the charging inlets is used as the active charging inlet.

According to another aspect of the present invention, the control pilot monitoring module implements a PE difference circuit to accurately measure the voltage value of the control pilot signal and/or the proximity pilot signal. In this manner, accurate measurement of the control pilot signal voltage level or proximity pilot signal level is obtained regardless of ground bounces that maybe experienced by the control pilot monitoring circuit.

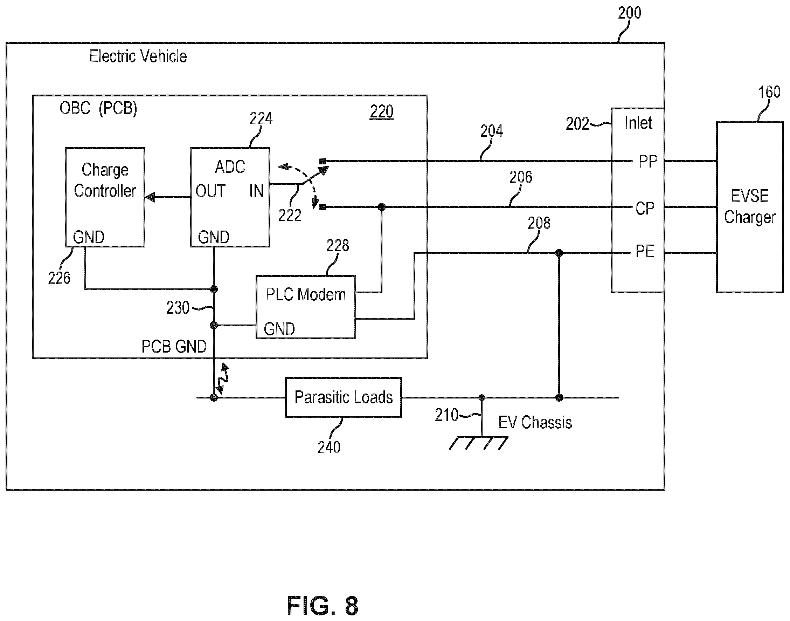

Figure 8 is a block diagram of an electric vehicle charging environment illustrating parasitic loading effects in some examples. In the example shown in Figure 8, an electric vehicle 200 includes a single charging inlet 202 for charging the electrical vehicle's rechargeable battery. The electric vehicle configuration shown in Figure 8 is illustrative only and is simplified for the purpose of the present discussion. The present discussion applies to an electric vehicle with a single charging inlet or dual charging inlets. As described above, the EVSE charger 160 provides on the cordset a control pilot (CP) signal and a proximity pilot (PP) signal which are both referenced to a protective earth (PE) line, which is the ground voltage of the EVSE 160. The control pilot signal has a voltage level that is set as the potential difference between the control pilot signal line and the PE signal line, which is the ground of the EVSE charger 160. The proximity pilot signal is driven by a bias voltage (Vdd voltage) in the electrical vehicle 200 and is also referenced to the PE signal line (also the ground of the EVSE charger 160). At the electric vehicle 200, the charging inlet 202 connects the CP signal, the PP signal and the PE signal to the on-board charger 220 to manage the charging process.

The on-board charger 220 typically includes electronic components formed on a printed circuit board. In the on-board charger 220, the PP signal and the CP signal are sampled by an analog-to-digital converter (ADC) 224. In some cases the PP signal and the CP signal maybe switchably connected to the ADC 224 by a switch 222. The ground of the ADC 224, together with the ground of the other electrical components of the on-board charger 220, are connected to the ground terminal of the printed circuit board ground (PCB GND) 230. The PCB ground terminal 230 is connected to the chassis of the electric vehicle (node 210).

Meanwhile, in the electric vehicle 200, the PE signal line 208 is also connected to the chassis ground of the electric vehicle (node 210). In the ideal situation, the PE signal line 208, the EV chassis 210 and the PCB ground 230 all have the same ground potential. In that case, when the ADC 224 measures the CP signal level relative to the PCB ground voltage (node 230), the ADC is actually measuring the CP signal level relative to the PE signal level, which would yield an accurate measurement of the CP signal voltage level.

However, due to parasitic loading effects, such as the presence of parasitic loads 240 at the ground node, the PCB ground level 230 may experience ground bounces, causing the PCB ground voltage to shift. If the ADC 224 is sampling the CP signal when the ground voltage is shifting, the measured CP signal level may deviate from the real value of the CP signal due to the difference between the PCB ground voltage (node 230) and the PE signal level (208). As such, any measurements or digitization of the control pilot or proximity pilot signal may provide a voltage level that deviates from the actual voltage level of the CP/PP signals provided by the EVSE 160.

In the above-described embodiments, the on-board charger of the electric vehicle incorporates the control pilot line monitoring module to perform the control pilot line monitoring function as well as providing support for managing multiple charging inlets on the electric vehicle. In further embodiments of the present invention, the control pilot monitoring module incorporates a PE difference circuit to accurately measure the actual voltage value of the control pilot signal, despite ground bounces that maybe present on the ground terminal of the control pilot line monitoring module. In some embodiments, the PE difference circuit is also configured to accurately measure the true voltage value of the proximity pilot signal. More specifically, the PE difference circuit measures the control pilot signal level relative to the PE signal level. The PE difference circuit may further measure the proximity pilot signal level relative to the PE signal level. Accordingly, even when the ground level of the control pilot line monitoring module shifts or the ground level of the printed circuit board on which the control pilot line monitoring module is located shifts, accurate measurement of the voltage level of the control pilot signal and/or the proximity pilot signal is realized.

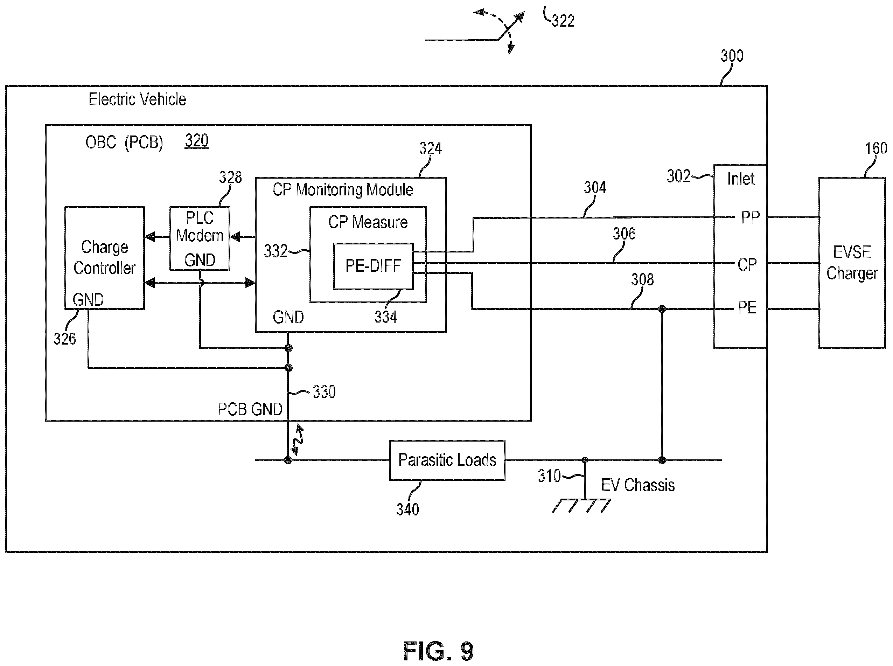

Figure 9 illustrates a control pilot monitoring module implemented in an on-board charger of an electric vehicle in embodiments of the present invention. In the example shown in Figure 9, an electric vehicle 300 includes a single charging inlet 302 for charging the electrical vehicle's rechargeable battery. The electric vehicle configuration shown in Figure 9 is illustrative only and is not intended to be limiting. The control pilot monitoring module of the present invention can be configured for an electric vehicle with a single charging inlet or dual charging inlets, as described and illustrated above with reference to Figures 2 and 4. Referring to Figure 9, as described above, an EVSE charger 160 provides on the cordset a control pilot (CP) signal and a proximity pilot (PP) signal which are both referenced to a protective earth (PE) line, which is the ground voltage of the EVSE 160. The control pilot signal has a voltage level that is set as the potential difference between the control pilot signal line and the PE signal line, which is the ground of the EVSE charger. The proximity pilot signal is driven by a bias voltage (Vdd voltage) in the electrical vehicle 300 and is also referenced to the PE signal line (also the ground of the EVSE charger).

At the electric vehicle 300, the charging inlet 302 connects the CP signal, the PP signal and the PE signal to the control pilot monitoring module 324. In the case the electric vehicle includes two charging inlets, the second charging inlet will also connect the respective CP signal, the PP signal and the PE signal to the control pilot monitoring module 324, in the manner as described above in Figures 2 and 4. In some embodiments, the control pilot monitoring module 324 is configured in the same manner as described above with reference to Figure 4 and includes a CP measure circuit 332 to detect the signal levels of one or more control pilot signals, one or more the proximity pilot signals and to measure the PWM characteristics of the one or more control pilot signals. For example, the CP measure circuit 332 can be implemented as shown and described in Figure 5. In embodiments of the present invention, the CP measure circuit 332 of the control pilot monitoring module 324 further includes a PE difference circuit 334. The PE difference circuit 334 measures the signal level of the control pilot signal and/or the proximity pilot signal relative to the protective earth signal. In this manner, the PE difference circuit 334 generates an output signal indicative of the actual signal level or voltage level of the control pilot signal and/or the proximity pilot signal, irrespective of any ground shifts that may appear on the ground terminal (node 330) of the control pilot monitoring module 324.

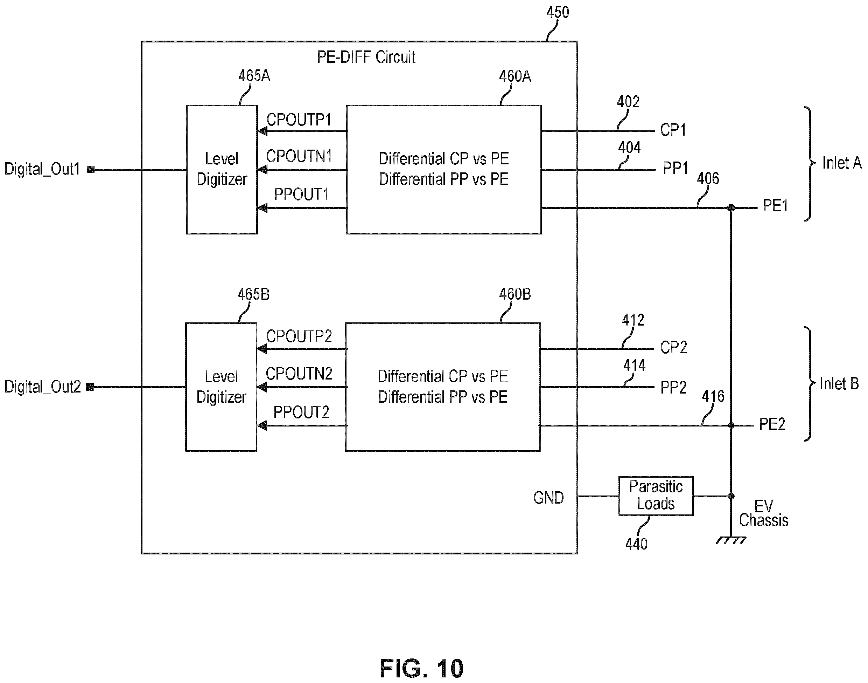

Figure 10 is a schematic diagram of a PE difference circuit for dual charging inlets in embodiments of the present invention. In some embodiments, the PE difference (PE-DIFF) circuit 450 in Figure 10 is implemented in the CP measure circuit of the control pilot monitoring module, such as described above with reference to Figures 2, 4 and 5. Referring to Figure 10, the PE difference circuit 450 includes two instances of a differential circuit 460. Each differential circuit 460 computes the difference between the control pilot signal and the PE signal. In some embodiments, each differential circuit 460 further computes the difference between the proximity pilot signal and the PE signal. In the present embodiment, the PE difference circuit 450 is configured for dual charging inlets including inlets A and B. A first instance of the differential circuit 460A is coupled to the control pilot signal CP1 (node 402), proximity pilot signal PP1 (node 404), and the protective earth signal PE1 (node 406) of the first charging inlet A. A second instance of the differential circuit 460B is coupled to the control pilot signal CP2 (node 412), proximity pilot signal PP2 (node 414), and the protective earth signal PE2 (node 416) of the second charging inlet B.

The PE1 signal (node 406) and the PE2 signal (node 416) are connected to the EV chassis. The ground of the PE difference circuit in the CP measure circuit is also connected to the EV chassis. As described above, parasitic loads associated with the ground connection may lead to ground bounces on the ground level of the PE difference circuit, resulting in a difference between the ground level of the PE different circuit and the protective earth signal (PE1 and PE2). However, the differential circuits 460A and 406B each computes the difference between the respective control pilot signal and the protective earth signal, or computes the difference between the respective proximity pilot signal and the protective earth signal. Accordingly, regardless of the ground bounces, accurate signal level of the control pilot signal and/or proximity pilot signal can be computed.

In the present embodiment, each differential circuit 460 generates a first output signal CPOUTP being the respective CP signal minus the PE signal when the CP signal has a positive voltage level. Each differential circuit 460 further generates a second output signal CPOUTN being the respective CP signal minus the PE signal when the CP signal has a negative voltage level. Finally, each differential circuit 460 generates a third output signal PPOUT being the respective PP signal minus the PE signal. The PE difference circuit 450 further includes two instances of a level digitizer 465. The first level digitizer 465A receives the set of output signals CPOUTP1, CPOUTN1 and PPOUT1 from differential circuit 460A as input signals and selectively generates a digital output signal Digital_Out1 indicative of one of the input signals. The second level digitizer 465B receives the set of output signals CPOUTP2, CPOUTN2 and PPOUT2 from differential circuit 460B as input signals and selectively generates a digital output signal Digital_Out2 indicative of one of the input signals.

As thus configured, a digitized signal indicative of either the positive CP voltage level, the negative CP voltage level, and the proximity pilot voltage level is generated by each instance of the level digitizer 465. The digital output signals Digital_Out can be used by the charge controller, such as the charge controller 326 in Figure 9. In some embodiments, the digital output signals Digital_Out can be stored in status registers to be read out by the charge controller, as described above with reference to Figure 4.

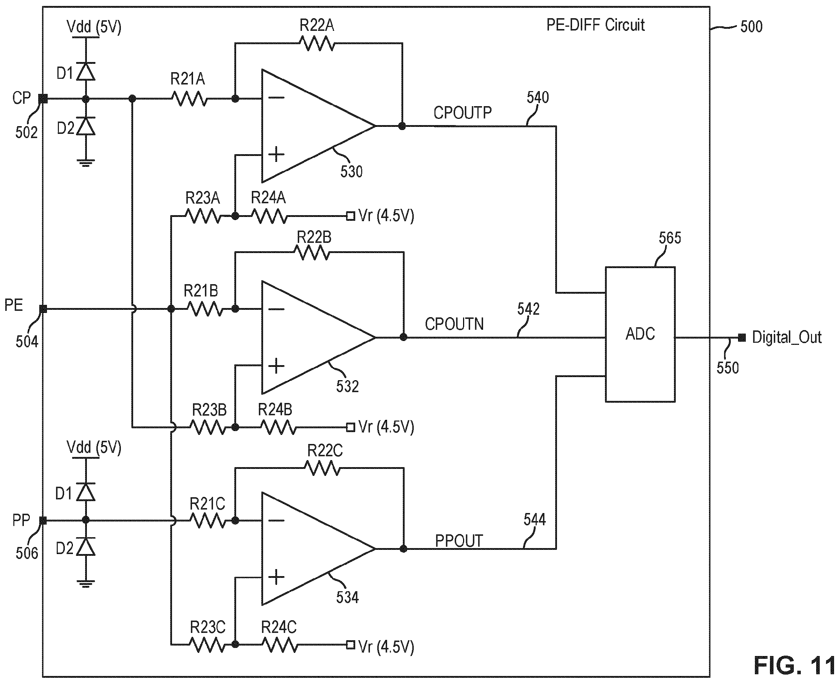

Figure 11 is a circuit implementation of a PE difference circuit in embodiments of the present invention. Figure 11 illustrates one instance of the differential circuit and one instance of the level digitizer for a single charging inlet. It is understood that the circuitry can be duplicated to construct additional instances of the differential circuit and the level digitizer in the case of dual charging inlet configurations. Referring to Figure 11, a PE difference circuit 500 includes a first differential amplifier 530, a second differential amplifier 532 and a third differential amplifier 534, each configured as a voltage follower with a one-fourth (1/4) gain.

More specifically, the CP signal (node 502) is coupled to the negative input terminal of the first differential amplifier 530 through a resistor R21A. A resistor R22A connects the negative input terminal to the output terminal 540 of the amplifier 530. The PE signal (node 504) is coupled to the positive input terminal of amplifier 530 through a voltage divider of resistors R23A and R24A, which is connected to a reference voltage (e.g. 4.5V). As thus configured, the differential amplifier 530 functions as a voltage follower to generate an output signal CPOUTP indicative of the difference between the positive CP voltage and the PE voltage and having one-fourth the magnitude of the difference. Furthermore, the output signal CPOUTP is inversely proportional to the CP-PE voltage difference. That is, as the CP minus PE voltage difference becomes larger, the output signal CPOUTP becomes smaller. In the present embodiment, the resistance of resistor R22A is one-forth the resistance of resistor R21A and the resistance of resistor R24A is one-forth the resistance of resistor R23A. In one embodiment, resistors R22A and R24A are each 100KΩ and resistors R21A and R23A are each 400KΩ.

The second differential amplifier 532 is configured in a similar manner with resistors R21B, R22B, R23B and R24B. Resistors R21B, R22B, R23B and R24B have resistance values configured in the same manner as resistors R21A, R22A, R23A and R24A. The PE signal (node 504) is coupled to the negative input terminal of the second differential amplifier 532 through the resistor R21B. The resistor R22B connects the negative input terminal to the output terminal 542 of the amplifier 532. The CP signal (node 502) is coupled to the positive input terminal of amplifier 532 through a voltage divider of resistors R23B and R24B, which is connected to the reference voltage (e.g. 4.5V). As thus configured, the differential amplifier 532 functions as a voltage follower to generate an output signal CPOUTN indicative of the difference between the negative CP voltage and the PE voltage and having one-fourth the magnitude of the difference. The output signal CPOUTN is proportional to the CP-PE voltage difference.

The third differential amplifier 534 is configured in a similar manner with resistors R21C, R22C, R23C and R24C. Resistors R21C, R22C, R23C and R24C have resistance values configured in the same manner as resistors R21A, R22A, R23A and R24A. The PP signal (node 506) is coupled to the negative input terminal of the first differential amplifier 534 through the resistor R21C. The resistor R22C connects the negative input terminal to the output terminal 544 of the amplifier 534. The PE signal (node 504) is coupled to the positive input terminal of amplifier 534 through a voltage divider of resistors R23C and R24C, which is connected to the reference voltage (e.g. 4.5V). As thus configured, the differential amplifier 534 functions as a voltage follower to generate an output signal PPOUT indicative of the difference between the PP voltage and the PE voltage and having one-fourth the magnitude of the difference.

In embodiments of the present invention, the level digitizer is implemented as an analog-to-digital converter (ADC) 565. The ADC 565 receives the signals CPOUTP, CPOUTN and PPOUT, and generates a digitized output signal Digital_Out on an output terminal 550. In some embodiments, the ADC 565 selects the signals CPOUTP, CPOUTN and PPOUT alternately to generate the digitized output signal Digital_Out. As described above, the CP measure circuit, in which the PE difference circuit is incorporated, can store the digitized output signal Digital_Out in registers to be read out by the charge controller.

The PE difference circuit 500, as thus configured, measures the voltage values of the control pilot signal and/or the proximity pilot signal by measuring the CP signal level and/or the PP signal level relative to the protective earth signal. In this manner, the true values of the control pilot signal level and/or the proximity pilot signal level are obtained.

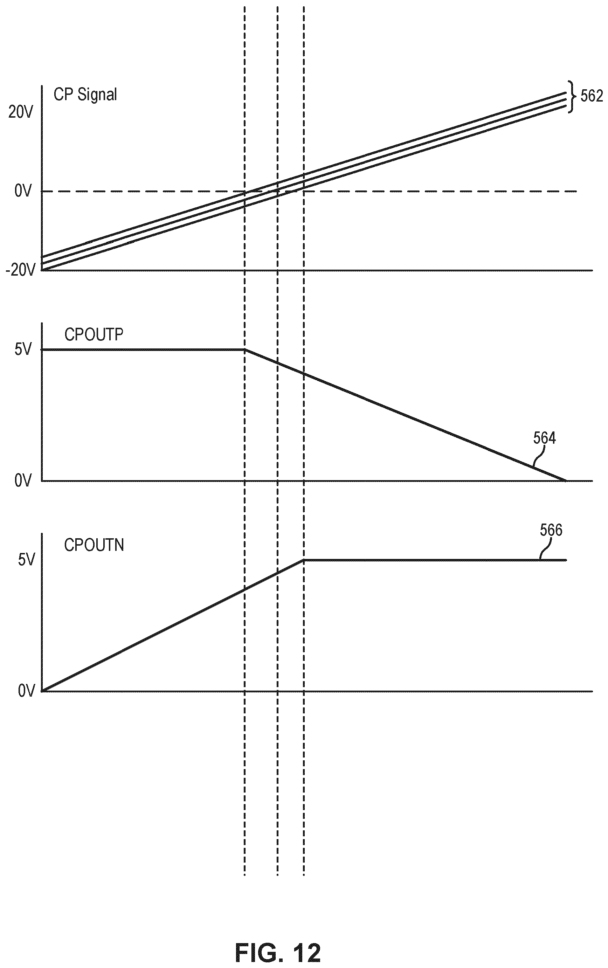

Figure 12 illustrates the operation of the PE difference circuit of Figure 11 in some examples. In the first plot, a set of curves 562 illustrates the CP signal varying from the -20V to +20V and having different signal levels due to ground offset. For example, the CP signal levels can vary by +/- 1V due to ground shift. In the second plot, the curve 564 illustrates the CPOUTP signal indicative of the difference between the CP signal and the PE signal when the CP signal is positive. The CPOUTP signal thus generated is inversely proportional to the positive CP signal. In the third plot, the curve 566 illustrates the CPOUTN signal indicative of the difference between the CP signal and the PE signal when the CP signal is negative. The CPOUTP signal thus generated tracks the negative CP signal. Importantly, despite the ground bounces, the set of CP signal input results in the same CPOUTP output signal and the same CPOUTN output signal. That is, the true value of the CP signal level is measured despite shifting of the ground voltage. The PE difference circuit ensures accurate measurement of the control pilot signal level, not interfered by differences in the ground voltage that may appear due to parasitic loading effects.

In this detailed description, process steps described for one embodiment may be used in a different embodiment, even if the process steps are not expressly described in the different embodiment. When reference is made herein to a method including two or more defined steps, the defined steps can be carried out in any order or simultaneously, except where the context dictates or specific instruction otherwise are provided herein. Further, unless the context dictates or express instructions otherwise are provided, the method can also include one or more other steps carried out before any of the defined steps, between two of the defined steps, or after all the defined steps.

Various embodiments are described in this application and are reflected in the claims. In addition, the following clauses set out features of embodiments:
Clause 1. A control pilot monitoring module in an on-board charger including a first charging inlet, comprising: a measure circuit coupled to a first control pilot line of the first charging inlet, the control pilot measure circuit detecting a first signal level and a first pulse width value of a first control pilot signal on the first control pilot line; and an evaluate circuit coupled to the measure circuit to receive the detected first signal level and the detected first pulse width value and to determine a status of the first charging inlet, the evaluate circuit determining the first charging inlet becoming an active charging inlet and having a connected status in response to the first signal level having a value indicative of a connection of the first charging inlet to an electrical vehicle supply equipment (EVSE), the evaluate circuit storing the first signal level, the first pulse width value and the status of the first charging inlet in a set of registers, wherein in response to the first charging inlet being determined to have a connected status, the control pilot monitoring module generates a first control signal to power up a charge controller of the on-board charger in response to the charge controller being in a power down mode, and the control pilot monitoring module generates a second control signal to wake up the charge controller of the on-board charger in response to the charge controller being in a low power mode.
Clause 2. The control pilot monitoring module of clause 1, wherein in response to the charge controller being in the power down mode, the control pilot monitoring module generates the first control signal as an enable signal to activate a first power supply to generate a power supply voltage to power up the charge controller.
Clause 3. The control pilot monitoring module of clause 1 or 2, wherein in response to the charge controller being in the low power mode, the control pilot monitoring module generates the first control signal as an interrupt signal to cause the charge controller to transition out of the low power mode.
Clause 4. The control pilot monitoring module of clause 3, wherein the evaluate circuit generates the interrupt signal and provides the interrupt signal on a signal line to the charge controller in response to determining the first charging inlet has become the active charging inlet.
Clause 5. The control pilot monitoring module of any preceding clause, wherein the evaluate circuit further determines a change in the pulse width value of the first charging inlet detected by the measure circuit, the evaluate circuit generates the second control signal as an interrupt signal to cause the charge controller to transition out of a low power mode.
Clause 6. The control pilot monitoring module of any preceding clause, wherein the first control pilot signal comprises a pulse-width modulation (PWM) signal upon connection of the first charging inlet to the EVSE, the pulse width value comprising the duty cycle of the PWM signal.
Clause 7. The control pilot monitoring module of any preceding clause, wherein the measure circuit comprises a difference circuit configured to generate a signal indicative of a difference in the signal level of the first control pilot signal relative to a first protective earth line, the difference circuit further generates a digital output signal indicative of the signal.
Clause 8. The control pilot monitoring module of any preceding clause, wherein the difference circuit is configured to generate a first signal indicative of a difference in the positive voltage level of the first control pilot signal relative to the first protective earth line, and to generate a second signal indicative of a difference in the negative voltage level of the first control pilot signal relative to the first protective earth line, the difference circuit further generates a digital output signal indicative of the first signal or the second signal.

In this detailed description, various embodiments or examples of the present invention may be implemented in numerous ways, including as a process; an apparatus; a system; and a composition of matter. A detailed description of one or more embodiments of the invention is provided above along with accompanying figures that illustrate the principles of the invention. The invention is described in connection with such embodiments, but the invention is not limited to any embodiment. Numerous modifications and variations within the scope of the present invention are possible. The scope of the invention is limited only by the claims and the invention encompasses numerous alternatives, modifications, and equivalents. Numerous specific details are set forth in the description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured. The present invention is defined by the appended claims.

## Claims

1. A control pilot monitoring module in an on-board charger of a dual charging inlet electric vehicle including a first charging inlet and a second charging inlet, comprising:
a measure circuit coupled to a first control pilot line of the first charging inlet and a second control pilot line of the second charging inlet, the control pilot measure circuit detecting a first signal level and a first pulse width value of a first control pilot signal on the first control pilot line and a second signal level and a second pulse width value of a second control pilot signal on the second control pilot line;
an evaluate circuit coupled to the measure circuit to receive the detected first and second signal levels and the detected first and second pulse width values and to determine an active charging inlet status, the evaluate circuit determining an active charging inlet among the first and second charging inlets in response to the first or second signal level having a value indicative of a connection of the first or second charging inlet to an electrical vehicle supply equipment (EVSE), the evaluate circuit storing the first and second signal levels, the first and second pulse width values and the active charging inlet status in a set of registers; and
a switch circuit configured to receive first and second power-line communication signals transmitted on the first and second control pilot lines of the first and second charging inlets and switchably connect a power-line communication signal associated with the active charging inlet to an output terminal in response to an inlet select signal, the inlet select signal being a data value stored in the set of registers and being indicative of the active charging inlet as determined by the evaluate circuit,
wherein in response to the first or second charging inlet being determined to be the active charging inlet, the control pilot monitoring module generates a first control signal to activate a charge controller of the on-board charger.

2. The control pilot monitoring module of claim 1, wherein the first and second control pilot signal each comprises a pulse-width modulation (PWM) signal upon connection of the respective first or second charging inlet to the EVSE, the pulse width value comprising the duty cycle of the PWM signal.

3. The control pilot monitoring module of claim 1 or 2, wherein each of the first and second power-line communication signals comprises differential signals and the differential signals of the first or second power-line communication signal comprise a positive power-line communication signal transmitted on the first or second control pilot line and a negative power-line communication signal transmitted on a first or second protective earth line.

4. The control pilot monitoring module of claim 3, wherein the switch circuit receives the inlet select signal from a configuration register in the set of registers, the inlet select signal having a value indicative of the active charging inlet, the value of the inlet select signal being set by the charge controller of the on-board charger through a communication interface between the charge controller and the set of registers.

5. The control pilot monitoring module of any preceding claim, wherein in response to the charge controller being in a power down mode, the control pilot monitoring module generates the first control signal as an enable signal to activate a first power supply to generate a power supply voltage to power up the charge controller.

6. The control pilot monitoring module of any preceding claim, wherein in response to the charge controller being in a low power mode, the control pilot monitoring module generates the first control signal as an interrupt signal to cause the charge controller to transition out of the low power mode.

7. The control pilot monitoring module of claim 7, wherein the evaluate circuit generates the interrupt signal and provides the interrupt signal on a signal line to the charge controller in response to determining a charging inlet has become the active charging inlet.

8. The control pilot monitoring module of any preceding claim, wherein the evaluate circuit further determines a change in the pulse width value of the active charging inlet from the first or second pulse width value detected by the measure circuit, the evaluate circuit generates the first control signal as an interrupt signal to cause the charge controller to transition out of a low power mode.

9. The control pilot monitoring module of any preceding claim, wherein the evaluate circuit stores in status registers in the set of the registers charging inlet status of the first and second charging inlets, the charging inlet status comprising a standby state where the charging inlet does not have any connection to the EVSE, a connected state where a respective charging inlet is connected to the EVSE, and a ready state when the charge controller indicates to the EVSE that the active charging inlet is ready for charging.

10. The control pilot monitoring module of any preceding claim, wherein the measure circuit comprises a plurality of comparators, each comparator comparing a signal indicative of the first or second control pilot signal to a reference voltage, the comparator generating an output signal indicative of the signal exceeding the reference voltage.

11. The control pilot monitoring module of claim 10, wherein the signal indicative of the first control pilot signal or the second control pilot signal comprises one of a signal indicative of a position voltage portion of the first control pilot signal, a position voltage portion of the second control pilot signal, a negative voltage portion of the first control pilot signal, and a negative voltage portion of the second control pilot signal.

12. The control pilot monitoring module of claim 10 or 11, wherein the signal indicative of the first control pilot signal or the second control pilot signal has a voltage range being a fraction of the positive voltage portion or a fraction of the negative voltage portion of the first or second control pilot signal.

13. The control pilot monitoring module of any preceding claim, wherein the measure circuit comprises a plurality of duration timers, a first duration timer being configured to measure a time duration of a positive voltage portion of the first or second control pilot signal, and a second duration timer being configured to measure a time duration of a negative voltage portion of the first or second control pilot signal, the measured time duration of the positive voltage portion of the first control pilot signal being the first pulse width value and the measured time duration of the positive voltage portion of the second control pilot signal being the second pulse width value.

14. The control pilot monitoring module of any preceding claim, wherein the measure circuit comprises a difference circuit configured to generate a signal indicative of a difference in the signal level of the first control pilot signal or the second control pilot signal relative to respective first or second protective earth line, the difference circuit further generates a digital output signal indicative of the signal.

15. The control pilot monitoring module of claim 14, wherein the difference circuit is configured to generate a first signal indicative of a difference in the positive voltage level of the first control pilot signal or the second control pilot signal relative to respective first or second protective earth line, and to generate a second signal indicative of a difference in the negative voltage level of the first control pilot signal or the second control pilot signal relative to respective first or second protective earth line, the difference circuit further generates a digital output signal indicative of the first signal or the second signal.
